# EUROPÄISCHE PATENTSCHRIFT

(11) **EP 3 650 744 B1**
(45) Veröffentlichungstag und Bekanntmachung des Hinweises auf die Patenterteilung: **19.06.2024**
(21) Anmeldenummer: 18204874.4
(22) Anmeldetag: 07.11.2018
(51) Int. Cl.: F21S 41/675, F21S 41/176, F21S 41/153, F21S 41/24, F21S 41/143

(54) **KRAFTFAHRZEUGSCHEINWERFERLICHTMODUL**
MOTOR VEHICLE HEADLAMP LIGHT MODULE
MODULE DE PHARE DE VÉHICULE AUTOMOBILE

(43) Veröffentlichungstag der Anmeldung: 13.05.2020
(73) Patentinhaber: ZKW Group GmbH, 3250 Wieselburg (AT)
(72) Erfinder: Riesenhuber, Michael, 3254 Bergland (AT); Pühringer, Jakob, 3370 Ybbs (AT)
(74) Vertreter: Patentanwaltskanzlei Matschnig & Forsthuber OG

(56) Entgegenhaltungen:
- EP-A1- 3 342 638
- EP-A2- 2 551 154
- WO-A1-2014/205466
- DE-A1-102016 216 616

## Beschreibung

Die Erfindung betrifft ein Kraftfahrzeugscheinwerferlichtmodul, das einen Laserscanner, zumindest ein Zusatzmodul und eine Projektionsvorrichtung umfasst,
wobei der Laserscanner eingerichtet ist, ein Teil-Leuchtbild zu erzeugen, das zumindest eine Zusatzmodul eingerichtet ist, zumindest ein Zusatz-Leuchtbild zu erzeugen, wobei das Teil-Leuchtbild und das zumindest eine Zusatz-Leuchtbild gemeinsam ein Gesamt-Leuchtbild bilden, wobei die Projektionsvorrichtung eingerichtet ist, das Gesamt-Leuchtbild in einen Bereich vor das Kraftfahrzeugscheinwerferlichtmodul in Form einer Lichtverteilung abzubilden. Die Projektionsvorrichtung bildet also das Gesamt-Leuchtbild in Form der Lichtverteilung ab, wenn das Kraftfahrzeugscheinwerferlichtmodul eingeschaltet ist.

Darüber hinaus betrifft die Erfindung einen Kraftfahrzeugscheinwerfer mit zumindest einem solchen Kraftfahrzeugscheinwerferlichtmodul.

Die WO 2014/205466 A1 zeigt einen Scheinwerfer für Fahrzeuge mit mehreren Lichtquellen.

Die DE 10 2016 216 616 A1 zeigt ein Beleuchtungssystem für einen Fahrzeugscheinwerfer mit einem Matrix-System und einem Laser Activated Remote Phosphor System.

Aus der EP 3 342 638 A1 ist eine Beleuchtungsvorrichtung für ein Fahrzeug bekannt, die zwei Lichtquellen kombiniert.

Laserscanner sind hinlänglich bekannt (siehe beispielsweise WO 2014/121314 A1, WO 2014/121315 A1, WO 2016/149717 A1, WO 2017/106894 A1, WO 2017/020054 A1, WO 2017/020055 A1 der Anmelderin). Diese Laserscanner dienen heutzutage oft lediglich als Zusatz-Lichtmodule, die einen (hochauflösenden) Teil einer Teil-Lichtverteilung, wie beispielsweise einer Teil-Fernlichtverteilung erzeugen können. Eine Teil-Fernlichtverteilung oder eine Gesamtlichtverteilungen lässt sich mit einem Laserscanner-Lichtmodul nur sehr schwer erzeugen. Dies liegt daran, dass die herkömmlichen Laserscanner Lichtverteilungen erzeugen können, die eine horizontale Breite von etwa -12° bis +12°, meist aber von etwa - 8,5° bis +8,5° aufweisen. Dieser horizontale Bereich ist zwar für Ausblendszenarien, bei welchen andere Verkehrsteilnehmer ausgeblendet werden, am wichtigsten, jedoch lässt sich ein breiterer horizontaler Bereich mit den herkömmlichen Laserscannern nur sehr schwer erzeugen. Dies rührt daher, dass bei den herkömmlichen Laserscannern Mikrospiegelaktoren, beispielsweise Mikroscanner, wie MEMS- oder MOEMS-Spiegel, und/oder Flächenlichtmodulatoren, wie Mikrospiegelarrays (z.B. DMD-chips) verwendet werden. Bei Flächenlichtmodulatoren wird die gesamte Fläche des Mikrospiegelarrays, wie eines DMD-chips, konstant (in der Zeit) ausgeleuchtet. Dabei ist die Intensität des auf die Fläche (auf den Chip) einfallenden Lichtes gemäß dem Lambert'schen Gesetzt verteilt, wobei die Intensität in der Mitte der Fläche maximal ist. Die einzelnen Spiegel des Mikrospiegelarrays sind zwischen "on" und "off" schaltbar. Durch Schalten der einzelnen Spiegel des Mikrospiegelarrays können somit unterschiedliche Leuchtbilder für eine hochauflösende Lichtverteilung erzeugt werden. Die Größe des Mikrospiegelarrays reicht allerdings nicht aus, um die gesamte, beispielsweise gesetzlich vorgeschriebene, Breite der Teil-Fernlichtverteilung zu erreichen. Wenn man beispielsweise einen herkömmlichen DMDchip verwendet, wäre es prinzipiell denkbar durch ändern der Fokallänge einer Projektionsbeziehungsweise Abbildungslinse die gesamte Breite der Teil-Fernlichtverteilung zu erreichen, dies würde jedoch zu Qualitätseinbußen, wie beispielsweise niedrige Auflösung, bei der Lichtverteilung führen. Verwendung von zwei oder mehr DMD-chips ist zu teuer. Bei Mikroscannern, wie MEMS- oder MOEMS-Spiegel, reicht hingegen deren Schwingungsamplitude nicht aus, um einen Bereich des entsprechenden Lichtkonversionsmittels (des Phosphors) abzutasten und dadurch ein Leuchtbild auf dem Phosphor zu schaffen, das zum Erzeugen der oben genannten, vorzugsweise gesetzeskonformen Lichtverteilungen breit genug wäre.

Unter einer Teil-Fernlichtverteilung wird eine Teil-Lichtverteilung verstanden, die gemeinsam mit einer Abblendlichtverteilung eine Fernlichtverteilung bildet.

Unter dem Begriff "Auflösung einer Lichtverteilung" wird im Zusammenhang mit der vorliegenden Erfindung der kleinste auszublendende Bereich dieser Lichtverteilung verstanden.

Wird beispielsweise als kleinstmöglicher Verkehrsteilnehmer ein Motorrad mit einer Breite von 1 m angenommen, sollte für diesen Verkehrsteilnehmer optimalerweise ein (horizontaler) Bereich von 1,5 m ausgeblendet werden. Es versteht sich, dass dieser Bereich nicht direkt am Scheinwerfer sondern in einer gewissen Entfernung ausgeblendet werden sollte. Um diese Entfernung zu berechnen, kann beispielsweise die maximale gesetzlich erlaubte Lichtstärke von 215000 cd herangezogen werden, die ein Scheinwerfer abgeben darf. Bei einer Entfernung von etwa 463 m entsprechen 215000 cd einer Beleuchtungsstärke von 1 lx - diese Entfernung wird oft als "1 Lux Grenze" bezeichnet. Befindet sich ein anderer Verkehrsteilnehmer, z.B. das vorgenannte Motorrad, innerhalb der 1 Lux Grenze soll er ausgeblendet werden, damit es nicht zu einer Blendung kommt. Ein Bereich von 1,5 m in einer Entfernung von 463 m entspricht einem Öffnungswinkel (von dem Scheinwerfer aus gesehen) und damit einer Auflösung von etwa 0,18° (siehe M. Reinprecht et al. "Solution Paths Towards High-Resolution ADB-Systems", pp. 177-186, 11th International Symposium on Automotive Lighting - ISAL 2015 - Proceedings of the Conference, Volume 16, ISBN 978-3-8316-4482-7).

Zusammenfassend lassen sich die Lichtverteilungen - und auch die Lichtmodule, die diese Lichtverteilungen erzeugen - in Hinblick auf Auflösung wie folgt charakterisieren:
- hochauflösende Lichtverteilung: Auflösung ist kleiner oder gleich 0,2°, beispielsweise zwischen 0,1° und 0,18°;
- Übergangsbereich: Auflösung ist zwischen 0,2° und 0,5°;
- mittlere Auflösung: Auflösung ist zwischen 0,5° und 1°;
- high perfomance Auflösung: Auflösung zwischen 1° und 3°;
- grobe Auflösung: Auflösung ist größer als 3°.

Konkret kann bei herkömmlichen hochauflösenden Systemen (Laserscannern) nicht der gesamte Winkelbereich des Fernlichtes (von etwa -30° bis etwa +30° horizontal) abgedeckt werden.

Ein möglicher Ansatz, dem Problem zu begegnen, ist mehrere Laserscanner-Lichtmodule nebeneinander anzuordnen. Dieser Ansatz ist allerdings kostenineffizient. Ein weiterer Ansatz besteht darin, ein Laserscanner-Lichtmodul neben anderen Lichtmodulen in einem Kraftfahrzeugscheinwerfer anzuordnen. Dabei können die Lichtmodule gemeinsam eine Lichtverteilung erzeugen, die eine niedrigere Auflösung als die Auflösung des Laserscanner-Lichtmoduls aufweist und gemeinsam mit der (hochauflösenden) Lichtverteilung des Laserscanner-Lichtmoduls die Teil-Fernlichtverteilung oder die Gesamtlichtverteilung erzeugen. Dieser Ansatz ist aufgrund einer hohen Anzahl der Lichtmodule, die alle ihre eigenen Projektionsvorrichtungen, Gehäuse, Steuereinrichtungen und so weiter aufweisen und zum Bereitstellen einer Teil-Fernlichtverteilung beziehungsweise einer Gesamtlichtverteilung benötigt werden, aufgrund eines kleinen Bauraums, der in einem Kraftfahrzeugscheinwerfer zur Verfügung steht, ebenfalls sehr ineffizient.

Ein Laserscanner umfasst folgende Bauelemente: zumindest eine Laserlichtquelle, zumindest einen Mikroscanner und ein Lichtkonversionsmittel. Beispielsweise kann ein solcher Mikroscanner zwei MEMS-Spiegel umfassen, die im Strahlengang nacheinander angeordnet sind. Dabei kann ein erster MEMS-Spiegel horizontal und ein zweiter MEMS-Spiegel vertikal verschwenkbar sein. Diese Bauelemente sind eingerichtet, derart zusammenzuwirken, dass in Betrieb des Laserscanners auf dem Lichtkonversionsmittel ein Leuchtbild erzeugt wird. Konkret wird das Licht der zumindest einen Laserlichtquelle auf den zumindest einen Mikroscanner (direkt oder indirekt) eingestrahlt und von dem Mikroscanner auf das Lichtkonversionsmittel scannend umgelenkt. Dabei wird mithilfe des Laserlichts, das mithilfe des zumindest einen Mikroscanners umgelenkt wird, ein vorgegebener Bereich auf dem Lichtkonversionsmittel abgetastet und dadurch ein (ebenfalls vorgegebenes) Leuchtbild erzeugt. Die Spiegel des zumindest einen Mikroscanners können um eine oder zwei Schwenkachsen verschwenkt werden. Der Laserscanner kann außerdem eine Steuereinrichtung umfassen, die der zumindest eine Mikroscanner und/oder die zumindest eine Laserlichtquelle steuert. Dabei kann es zweckmäßig sein, den zumindest einen Mikroscanner in Abhängigkeit von der zumindest einen Laserlichtquelle zu steuern beziehungsweise die Steuerung des zumindest einen Mikroscanners auf die Steuerung, beispielsweise Modulation, wie Lichtintensitätsmodulation, der zumindest einen Laserlichtquelle abzustimmen. Die Steuereinrichtung kann sich auch außerhalb des Laserscanners befinden und diesem zugeordnet sein. Der Laserscanner kann auch mehrere einzelne Laserlichtquellen umfassen. Dabei kann jeder einzelnen Laserlichtquelle ein eigener Mikroscanner zugeordnet sein. Es ist auch möglich, Licht mehrerer Laserlichtquellen auf nur einen Mikroscanner zu lenken, dann würden alle Laserlichtstrahlen gleich (synchron) bewegt werden. Ein herkömmlicher Laserscanner kann auch weitere Bauelemente umfassen, wie beispielsweise (fokussierende oder aufweitende) Linsen, die zwischen den entsprechenden Laserlichtquellen und Mikroscannern angeordnet sein können, weitere Umlenkelemente, Lichtleiter und so weiter und so fort. Um aus dem Leuchtbild eine Lichtverteilung zu erzeugen, ist einem Laserscanner typischerweise eine Projektionsvorrichtung, wie eine Abbildungslinse, beispielsweise eine Freiformlinse, zugeordnet. Ein Laserscanner mit einer dem Laserscanner zugeordneten Projektionsvorrichtung bildet ein Laserscanner-Lichtmodul, welches dazu eingerichtet ist, eine Lichtverteilung zu erzeugen. Die Projektionsvorrichtung bildet das Leuchtbild in Form einer Lichtverteilung vor das Laserscanner-Lichtmodul ab. Für weitere Details hinsichtlich der Laserscanner und Laserscanner-Lichtmodule siehe beispielsweise WO 2014/121314 A1, WO 2014/121315 A1, WO 2016/149717 A1, WO 2017/106894 A1, WO 2017/020054 A1, WO 2017/020055 A1 der Anmelderin.

Die Aufgabe der vorliegenden Erfindung besteht darin, die vorgenannten Nachteile des Standes der Technik zu beseitigen.

Die Aufgabe wird mit einem Kraftfahrzeugscheinwerferlichtmodul der oben genannten Art erfindungsgemäß dadurch gelöst, dass das zumindest eine Zusatz-Leuchtbild an das Teil-Leuchtbild angrenzt, vorzugsweise ohne es zu überlappen, wobei das Teil-Leuchtbild mittels der Projektionsvorrichtung als eine hochauflösende Teil-Lichtverteilung vor das Kraftfahrzeugscheinwerferlichtmodul abgebildet wird und das zumindest eine Zusatz-Leuchtbild mittels der Projektionsvorrichtung als eine nicht-hochauflösende Zusatz-Lichtverteilung vor das Kraftfahrzeugscheinwerferlichtmodul abgebildet wird. Dadurch ergibt sich ein kostengünstiges Kraftfahrzeugscheinwerferlichtmodul, dass beispielsweise eine Teil-Fernlichtverteilung in ihrer vollen gesetzlich vorgeschriebenen Breite erzeugen kann, beispielsweise von etwa -30° bis +30° horizontal. Außerdem wird gewährleistet, dass zwischen dem Teil-Leuchtbild und dem zumindest einen Zusatz-Leuchtbild keine Lücken vorhanden sind.

Vorzugsweise weist die Zusatz-Lichtverteilung eine grobe Auflösung auf.

Das zumindest eine Zusatzmodul kann somit in das Laserscanner-Modul integriert werden, wodurch sich eine besonders kompakte Ausführungsform des Kraftfahrzeugscheinwerferlichtmoduls ergibt. Ein weiteres Modul ist nicht mehr notwendig, um die notwenige Breite der Lichtverteilung, beispielsweise der Fernlichtverteilung, zu erreichen. Daher entfällt die Notwendigkeit, separate Lichtmodule in einem KFZ-Scheinwerfer zueinander einzustellen.

Es kann dabei mit Vorteil vorgesehen sein, dass das zumindest eine Zusatz-Leuchtbild in horizontaler Richtung eine niedrigere Auflösung als das Teil-Leuchtbild aufweist und/oder in horizontaler Richtung an das Teil-Leuchtbild angrenzt.

Das Kraftfahrzeugscheinwerferlichtmodul weist genau einen einstückigen Kühlkörper auf, der sowohl dem Laserscanner als auch dem zumindest einen Zusatzmodul zugeordnet ist. Bei dieser Ausführungsform kann die Wärme sowohl von dem Laserscanner als auch von dem zumindest einen Zusatzmodul mittels eines und desselben Kühlkörper abgeführt werden. Darüber hinaus ergibt sich dabei ein besonders kompakter Aufbau.

Es ist vorgesehen, dass der Laserscanner zumindest eine Laserlichtquelle und ein Lichtkonversionsmittel aufweist, wobei das Teil-Leuchtbild auf dem Lichtkonversionsmittel mittels Laserlichts der zumindest einen Laserlichtquelle erzeugbar ist.

Bei einer besonders vorteilhaften Ausführungsform kann vorgesehen sein, dass das zumindest eine Zusatzmodul zumindest eine, vorzugsweise halbleiterbasierte Lichtquelle, wie eine LED-Lichtquelle, und zumindest eine Vorsatzoptik, wie einen lichtleitenden Optikkörper, umfasst, wobei die zumindest eine Vorsatzoptik der zumindest einen Lichtquelle in Abstrahlrichtung derart nachgelagert ist, dass das Zusatz-Leuchtbild auf einer Lichtaustrittsfläche der zumindest einen Vorsatzoptik durch Licht der zumindest einen Lichtquelle erzeugbar ist und im eingeschalteten Zustand der zumindest einen Lichtquelle gebildet wird.

Dabei kann es zweckdienlich sein, wenn die Lichtaustrittsfläche und das Lichtkonversionsmittel in einer gemeinsamen Fläche, vorzugsweise in einer Brennfläche, insbesondere in einer Brennebene der Projektionsvorrichtung angeordnet sind und beispielsweise entlang einer, vorzugsweise vertikalen Linie einander berühren beziehungsweise in horizontaler Richtung nebeneinander und aneinander angrenzend angeordnet sind. Dadurch kann der Lichtaustritt in der gleichen Fläche vorzugsweise Ebene realisiert werden. Hierdurch wird ermöglicht, dass sowohl das Teil-Leuchtbild als auch das zumindest eine Zusatz-Leuchtbild in der gleichen Fläche, vorzugsweise Ebene, liegen. Somit können beide Leuchtbilder durch die Projektionsvorrichtung, beispielsweise eine Abbildungslinse, scharf abgebildet werden. Weiters kann ein für die Vorsatzoptik und für das Lichtkonversionsmittel gemeinsamer Träger vorgesehen sein, wobei beispielsweise die Lichtaustrittsfläche und das Lichtkonversionsmittel in dem Träger eingefasst sind.

Es können sich weitere Vorteile ergeben, wenn das Lichtkonversionsmittel und die Lichtaustrittsfläche im Wesentlichen rechteckige Form aufweisen und/oder in horizontaler Richtung nebeneinander und aneinander angrenzend angeordnet sind.

Die Begriffe "horizontal" und "vertikal" beziehen sich auf eine fachübliche Einbaulage des Kraftfahrzeugscheinwerferlichtmoduls in einem Kraftfahrzeug.

Bei einer bevorzugten Ausführungsform kann vorgesehen sein, dass die zumindest eine Vorsatzoptik einen Grundkörper und zwei oder mehrere, vorzugsweise trichterförmigen Lichtleitkörper umfasst, die dem Grundkörper vorspringen und mit dem Grundkörper eine monolithische Struktur bilden, deren Lichtauskoppelflächen aneinander angrenzen und gemeinsam die Lichtaustrittsfläche bilden. Vorzugsweise ist die Vorsatzoptik aus Silikon.

Dabei kann es zweckmäßig sein, wenn jedes Zusatzmodul eine der Anzahl der Lichtleitkörper entsprechende Anzahl an Lichtquellen, beispielsweise LED-Lichtquellen aufweist, wobei vorzugsweise jedem Lichtleitkörper genau eine Lichtquelle zugeordnet ist.

Darüber hinaus kann mit Vorteil vorgesehen sein, dass das zumindest eine Zusatzmodul eingerichtet ist, ein segmentiertes Zusatz-Leuchtbild zu erzeugen. Dabei kann jedes Segment des Zusatz-Leuchtbilds durch Leuchten einer entsprechenden Lichtauskoppelfläche erzeugt werden, wenn die zumindest eine Vorsatzoptik, wie vorstehend beschrieben, aus zwei oder mehreren lichtleitenden, vorzugsweise trichterförmigen Optikkörpern, deren Lichtauskoppelflächen aneinander angrenzen, gebildet ist. Jedes Segment kann mit einer einzigen LED erzeugt werden und beispielsweise eine Breite von etwa 2,2 mm aufweisen.

Bei einer bevorzugten Ausführungsform kann vorgesehen sein, dass die Projektionsvorrichtung eine Projektionslinse, beispielsweise eine Freiformlinse ist.

Weiters kann vorgesehen sein, dass die Lichtverteilung eine Teil-Fernlichtverteilung, insbesondere eine blendfreie Teil-Lichtverteilung ist.

Es ist vorgesehen, dass das Kraftfahrzeugscheinwerferlichtmodul ein Gehäuse aufweist, wobei der Laserscanner, das zumindest eine Zusatzmodul und vorzugsweise die Projektionsvorrichtung in dem Gehäuse angeordnet und vorzugsweise gehalten sind. Bei einer solchen Anordnung werden Toleranzen zwischen dem Laserscanner und dem zumindest einen Zusatzmodul, auf die es beim Einstellen des Kraftfahrzeugscheinwerferlichtmoduls zu achten gilt, deutlich reduziert. Dies erleichtert das Justieren des Kraftfahrzeugscheinwerferlichtmoduls.

Das Kraftfahrzeugscheinwerferlichtmodul weist genau zwei Zusatzmodule auf, die eingerichtet sind, jeweils ein erstes Zusatz-Leuchtbild und ein zweites Zusatz-Leuchtbild zu erzeugen, und hinsichtlich des Laserscanners derart angeordnet sind, dass das erste Zusatz-Leuchtbild in Abstrahlrichtung gesehen (horizontal) rechts von dem Teil-Leuchtbild angeordnet ist und das zweite Zusatz-Leuchtbild in Abstrahlrichtung gesehen (horizontal) links von dem Teil-Leuchtbild angeordnet ist.

Die Erfindung samt weiteren Vorteilen ist im Folgenden an Hand beispielhafter Ausführungsformen näher erläutert, die in der Zeichnung veranschaulicht sind. In dieser zeigt
Fig. 1 eine Draufsicht eines Lichtmoduls;
Fig. 2 eine Vorderansicht eines Gesamt-Leuchtbildes;
Fig. 3 eine Lichtverteilung in einem Bereich vor einem Lichtmodul, und
Fig. 4 eine perspektivische Ansicht eines Lichtmoduls.

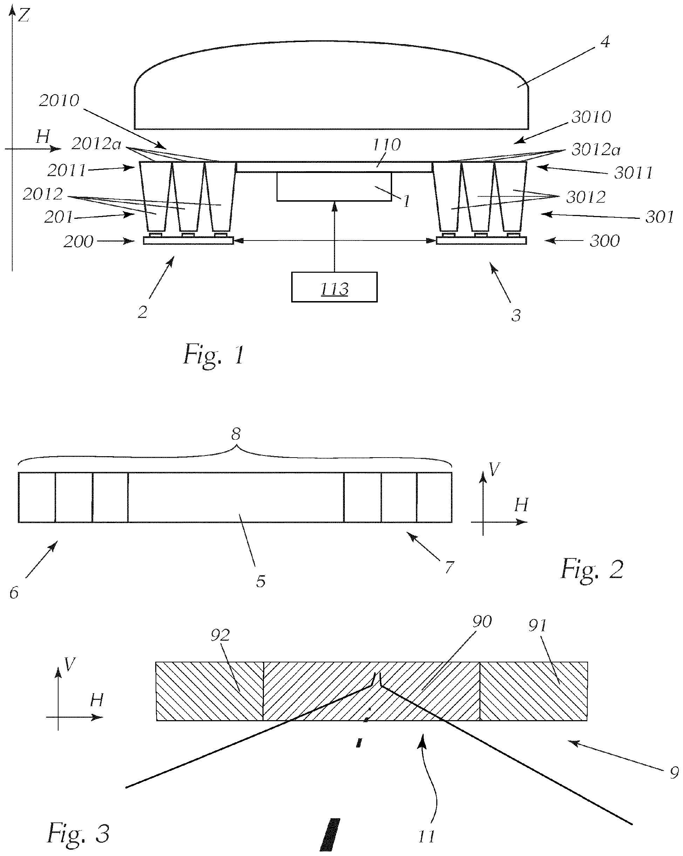

Zunächst wird auf Figur 1 Bezug genommen. Diese zeigt schematisch ein Lichtmodul in Draufsicht, das dem erfindungsgemäßen Kraftfahrzeugscheinwerferlichtmodul entsprechen kann. Das Lichtmodul umfasst einen Laserscanner **1,** zumindest ein Zusatzmodul **2, 3** und eine Projektionsvorrichtung **4.** Der Laserscanner 1 ist eingerichtet, ein Teil-Leuchtbild **5** zu erzeugen. Im eingeschalteten Zustand erzeugt der Laserscanner 1 das Teil-Leuchtbild 5 auf seinem Lichtkonversionsmittel **110.** Das zumindest eine Zusatzmodul **2, 3** ist eingerichtet, zumindest ein Zusatz-Leuchtbild **6, 7** zu erzeugen, wobei das Teil-Leuchtbild 5 und das zumindest eine Zusatz-Leuchtbild 6, 7 gemeinsam ein Gesamt-Leuchtbild **8** bilden (siehe Figur 2). Figur 1 zeigt beispielsweise zwei Zusatzmodule 2, 3, die, horizontal gesehen, jeweils rechts und links von dem Laserscanner 1 angeordnet sind. Die Projektionsvorrichtung 4 ist eingerichtet, das Gesamt-Leuchtbild 8 in einen Bereich **11** vor das Kraftfahrzeugscheinwerferlichtmodul in Form einer Lichtverteilung **9** abzubilden. Die Projektionsvorrichtung 4 ist vorzugsweise einstückig und ist sowohl dem Laserscanner 1 als auch dem zumindest einen Zusatzmodul 2, 3 in Abstrahlrichtung **Z** nachgelagert. Beispielsweise kann die Projektionsvorrichtung 4 als eine Linse, beispielsweise als eine Freiformlinse ausgebildet sein, wobei das Gesamt-Leuchtbild 8 in einem Brennpunkt/Brennebene/Brennfläche dieser Linse liegt. Das Teil-Leuchtbild 5 weist eine höhere Auflösung als das zumindest eine Zusatz-Leuchtbild 6, 7 auf. Darüber hinaus grenzt das zumindest eine Zusatz-Leuchtbild 6, 7 an das Teil-Leuchtbild 5 an, vorzugsweise ohne es zu überlappen. Damit wird erreicht, dass zwischen den Leuchtbildern keine Lücken entstehen und dadurch eine lückenfreie Lichtverteilung 9 realisiert werden kann. Somit kann eine beispielsweise gesetzeskonforme Lichtverteilung 9 ohne große Intensitätsschwankungen aufgrund überlappender Leuchtbilder (des Teil-Leuchtbilds 5 und des zumindest einen Zusatz-Leuchtbilds 6, 7) geschaffen werden.

Es sei an dieser Stelle angemerkt, dass ein einziges Zusatzmodul 2 oder 3 ausreichen würde, da je ein erfindungsgemäßes Kraftfahrzeugscheinwerferlichtmodul in je einem Kraftfahrzeugscheinwerfer (links und rechts) verbaut werden kann. Somit können zwei Kraftfahrzeugscheinwerferlichtmodule in diesem Fall eine gesetzeskonforme Lichtverteilung erzeugen.

Die Zusatzmodule 2, 3 können jeweils zumindest eine, vorzugsweise halbleiterbasierte Lichtquelle **200, 300,** wie eine LED-Lichtquelle, und zumindest eine Vorsatzoptik **201, 301,** wie ein lichtleitender Optikkörper umfassen, wobei die zumindest eine Vorsatzoptik 201, 301 der zumindest einen Lichtquelle 200, 300 in Abstrahlrichtung Z derart nachgelagert ist, dass das Zusatz-Leuchtbild 6, 7 auf einer Lichtaustrittsfläche 2010, 3010 der zumindest einen Vorsatzoptik 201, 301 mittels Lichts der zumindest einen Lichtquelle 200, 300 erzeugt wird. Darüber hinaus kann die Vorsatzoptik 201, 301 der Lichtquelle 200, 300 derart nachgeordnet sein, dass im Wesentlichen gesamtes Licht der Lichtquelle 200, 300 in die Vorsatzoptik 201, 301 eingestrahlt wird, wobei das im Wesentlichen gesamte in die Vorsatzoptik 201, 301 eingestrahlte Licht durch eine Lichtaustrittsfläche **2012a, 3012a** der zumindest einen Vorsatzoptik 201, 301 austritt.

Die zumindest eine Vorsatzoptik kann aus einem totalreflektierenden Material, wie Silikon oder Glas, gebildet sein und eine derartige Form aufweisen, dass Licht, das durch ihre Lichteintrittsfläche eingekoppelt wird, aufgrund totaler innerer Reflexion an ihren Grenzflächen beinah ohne Verluste zu ihrer Lichtaustrittsfläche geleitet wird und an der Lichtaustrittsfläche austritt.

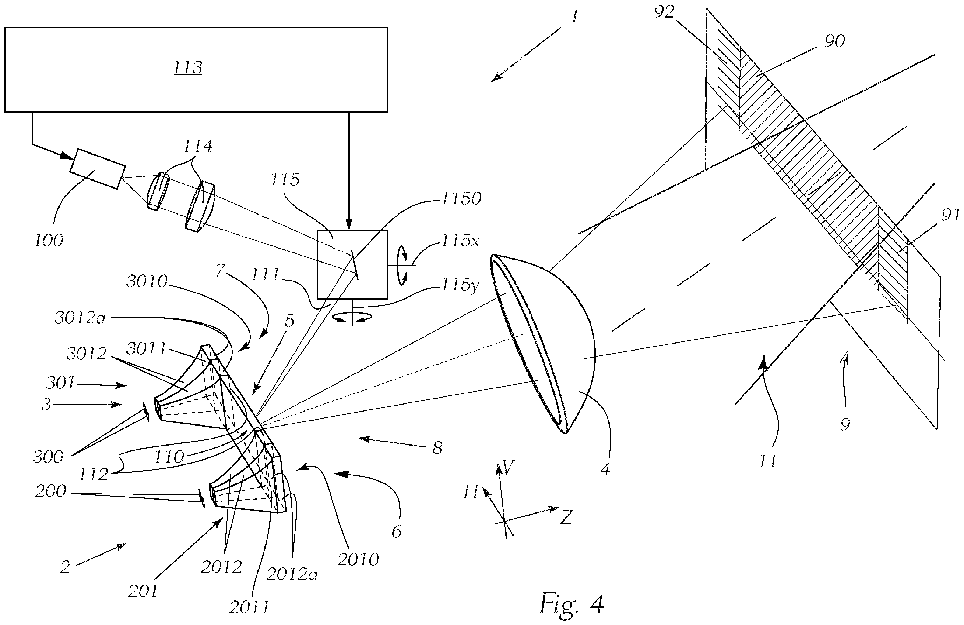

In Figur 1 weist jedes Zusatzmodul 2, 3 eine LED-Lichtquelle auf, die drei auf einer gemeinsamen Platine angeordneten LEDs umfasst. Die Anzahl der Lichtquellen pro Zusatzmodul kann variieren. Figur 4 zeigt beispielsweise LED-Lichtquellen, die jeweils zwei LEDs aufweisen. Im Falle von LED-Lichtquellen können die LEDs auch matrixartig in einer gemeinsamen Ebene angeordnet sein (nicht gezeigt). Die Vorsatzoptiken 201, 301 können jeweils einen Grundkörper **2011, 3011** und zwei (Figur 4) oder mehrere (Figur 1), vorzugsweise trichterförmigen Lichtleitkörper **2012, 3012** umfassen, die dem Grundkörper 2011, 3011 vorspringen und mit dem Grundkörper 2011, 3011 eine monolithische Struktur bilden, deren Lichtauskoppelflächen 2012a, 3012a aneinander angrenzen und gemeinsam die Lichtaustrittsfläche 2010, 3010 bilden (siehe auch Figur 4). Die Vorsatzoptiken 201, 301 können aus Silikon oder Glas (beispielsweise TIR-Optiken) ausgebildet sein. Lichtauskoppelflächen 2012a, 3012a eines jeden Lichtleitkörpers 2012, 3012 kann beispielsweise einem Segment des entsprechenden Zusatz-Leuchtbildes 6, 7 entsprechen. Jeder Lichtleitkörper 2012, 3012 weist ebenfalls eine Lichteintrittsfläche, in welche die Lichtstrahlen der Lichtquellen 200, 300 einspeisbar sind. Wie oben beschrieben, besteht die lichtleitende Eigenschaft der Lichtleitkörper 2012, 3012 darin, dass sie die in sie eingespeisten Lichtstrahlen (beinah) ohne Verluste zur ihren Lichtauskoppelflächen 2012a, 3012a beispielsweise aufgrund der totalen inneren Reflexion leiten.

Es kann zweckmäßig sein, wenn jedes Zusatzmodul 6, 7 eine der Anzahl der Lichtleitkörper 2012, 3012 entsprechende Anzahl an Lichtquellen 200, 300 aufweist, wobei vorzugsweise jedem Lichtleitkörper 2012, 3012 genau eine Lichtquelle 200, 300 zugeordnet ist.

Figur 2 lässt erkennen, dass das zumindest eine Zusatz-Leuchtbild 6, 7 in horizontaler Richtung H eine niedrigere Auflösung als das Teil-Leuchtbild 5 aufweisen kann. Darüber hinaus ist Figur 2 zu entnehmen, dass das zumindest eine Zusatz-Leuchtbild 6, 7 in horizontaler Richtung H an das Teil-Leuchtbild 5 angrenzt.

Bei einer bevorzugten Ausführungsform kann der Laserscanner 1 zumindest eine Laserlichtquelle **100** und ein Lichtkonversionsmittel 110 aufweisen. Das Teil-Leuchtbild 5 wird auf dem Lichtkonversionsmittel 110 mittels Laserlichts **111** der zumindest einen Laserlichtquelle 100 erzeugt.

Figur 1 lässt darüber hinaus erkennen, dass das Lichtmodul eine Steuereinrichtung **113** aufweisen kann, die sowohl den Laserscanner 1 als auch beide Zusatzmodule 2, 3 steuern kann.

Weiters ist Figur 1 zu entnehmen, dass die Lichtaustrittsfläche 2010, 3010 und das Lichtkonversionsmittel 110 in einer gemeinsamen Fläche, vorzugsweise in einer Brennfläche, insbesondere in einer Brennebene der Projektionsvorrichtung 4 angeordnet sein können und dabei beispielsweise entlang einer, vorzugsweise vertikalen Linie **112** einander berühren beziehungsweise in horizontaler Richtung H nebeneinander und aneinander angrenzend angeordnet sein können. Dadurch kann das Gesamt-Leuchtbild 8 in dem Brennpunkt der Projektionsvorrichtung 4 positioniert werden.

Figuren 1, 2 und 4 lassen darüber hinaus erkennen, dass das Lichtkonversionsmittel 110 und die Lichtaustrittsfläche 2010, 3010 im Wesentlichen rechteckige Form aufweisen und/oder in horizontaler Richtung **H** nebeneinander und aneinander angrenzend angeordnet sind.

Beispielsweise können die Zusatzmodule 2, 3 eingerichtet sein, jeweils segmentierte Zusatz-Leuchtbilder 6, 7 zu erzeugen (Figur 2). Dabei kann jedes Segment des jeweiligen Zusatz-Leuchtbilds 6, 7, wie vorstehend beschrieben, durch Leuchten der entsprechenden Lichtauskoppelflächen 2012a, 3012a erzeugt werden.

Figur 3 zeigt eine blendfreie Teil-Fernlichtverteilung 9, die aus einem zentralen Segment **90** - hochauflösende Teil-Lichtverteilung - und zwei jeweils in horizontaler Richtung H links und rechts von dem zentralen Segment 90 angeordneten Seitensegmenten **91**, **92** - so genannten "Seitensegel" - besteht. Jedes Seitensegel bildet eine, in dem vorliegenden Fall, grobauflösende Zusatz-Lichtverteilung. Sowohl das zentrale Segment 90 als auch die Seitensegmente 91 und 92 sind rechteckig, können aber eine von der rechteckigen Form abweichende Form aufweisen. Konkret weisen die Segmente 90, 91 und 92 eine geringere Ausdehnung in vertikaler Richtung V als in horizontaler Richtung H auf. Seitensegmente können aus sich überlappenden Segmenten bestehen. Die Seitensegmente 91 und 92 sind beispielsweise in einem Bereich von etwa -30° bis etwa -12° horizontal beziehungsweise von etwa +12° bis +30° horizontal angeordnet. Die Seitensegmente 91, 92 können als Abbildungen der jeweiligen beispielsweise segmentierten Zusatz-Leuchtbilder 6, 7 ausgebildet sein.

Das zumindest eine Zusatzmodul 2, 3 kann auch derart ausgebildet sein, dass die Zusatz-Lichtverteilung zwar nicht hoch auflösend ist, dennoch eine relativ höhere Auflösung, beispielsweise eine Auflösung aus dem Übergangsbereich oder aus dem mittleren Bereich, aufweist, um beispielsweise Randgegenstände, wie Fußgänger, Bäume, Tiere, Verkehrsschilder oder Ähnliches zu beleuchten oder auszublenden. Dabei kann es sich um jene Randgegenstände handeln, die beispielsweise etwa 10 m bis 100 m vom Kraftfahrzeug entfernt sind. Solche Seitensegel werden allerdings dementsprechend teurer und aufwändiger im Aufbau.

Die Teil-Fernlichtverteilung 9 kann mittels zwei Lichtmodule mit je einem Zusatzmodul oder mit einem Lichtmodul mit zwei Zusatzmodulen erzeugt werden. Es versteht sich, dass auch andere Lichtverteilung, wie eine Gesamtlichtverteilung, beispielsweise eine Fernlichtverteilung, auf diese Art und Weise erzeugt werden können.

Figur 4 zeigt das Lichtmodul in perspektivischer Ansicht. Dabei ist der Aufbau des Laserscanners 1 etwas ausführlicher gezeigt. Der Laserscanner 1 weist eine Laserlichtquelle 100, deren Licht über ein Abbildungssystem, beispielsweise Kollimationssystem 114, auf einen Mikroscanner **115** gelangt. Das Kollimationssystem 114 kann aus fokussierenden und/oder aufweitenden Linsen gebildet sein. Der Mikroscanner 115 kann einen Mikrospiegel oder eine Mehrzahl von Mikrospiegeln **1150** aufweisen, der/die vorzugsweise um zwei orthogonal zueinander stehende Drehachsen **1150x** und **1150y** drehbar ist/sind. Sowohl die Laserlichtquelle 100 als auch der Mikroscanner 115 werden mittels einer Steuereinrichtung gesteuert. Diese Steuereinrichtung kann beispielsweise die vorgenannte Steuereinrichtung 113 sein, die gleichzeitig auch die Zusatzmodule 2 und 3 steuert. Dadurch kann die Steuerung des Laserscanners 1 und die Steuerung der Zusatzmodule 2, 3 leichte aufeinander abgestimmt werden.

Das Licht der Laserlichtquelle 100 wird (direkt oder indirekt) auf die Mikrospiegel 1150 eingestrahlt und von diesen auf das Lichtkonversionsmittel 110 umgelenkt. Durch Bewegung der Mikrospiegel 1150 um die Drehachsen 1150x und/oder 1150y wird das Licht 111 in verschiedene Richtungen umgelenkt, wodurch eine Bewegung des Laserpunktes auf dem Lichtkonversionsmittel 110 verursacht und somit das Teil-Leuchtbild 5 erzeugt wird. Eine solche Bewegung des Laserpunktes wird oft als scannen" des Lichtkonversionsmittels 110 mittels Laserlichts 111 genannt. Es versteht sich, dass der Laserscanner 1 auch mehrere Laserlichtquellen 100, mehrere Kollimationssysteme 114 und auch mehrere Mikroscanners 115 aufweisen kann (siehe z.B. WO 2014/121314 A1, WO 2014/121315 A1, WO 2016/149717 A1, WO 2017/106894 A1, WO 2017/020054 A1, WO 2017/020055 A1 der Anmelderin).

Das Lichtmodul umfasst ein Gehäuse (nicht gezeigt), in dem sowohl der Laserscanner als auch das zumindest eine Zusatzmodul angeordnet sind. Dabei sind im Gehäuse Halteelemente zum Halten der Projektionsvorrichtung 4 vorgesehen.

Solange es sich nicht aus der Beschreibung einer der oben genannten Ausführungsformen zwangsläufig ergibt, wird davon ausgegangen, dass die beschriebenen Ausführungsformen beliebig miteinander kombiniert werden können. Unter anderem bedeutet dies, dass auch die technischen Merkmale einer Ausführungsform mit den technischen Merkmalen einer anderen Ausführungsform einzeln und unabhängig voneinander nach Belieben kombiniert werden können, um auf diese Weise zu einer weiteren Ausführungsform derselben Erfindung zu gelangen.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Kraftfahrzeugscheinwerferlichtmodul umfassend
- einen Laserscanner (1)
- zumindest ein Zusatzmodul (2, 3) und
- eine Projektionsvorrichtung (4),
wobei
* der Laserscanner (1) eingerichtet ist, ein Teil-Leuchtbild (5) zu erzeugen,
* das zumindest eine Zusatzmodul (2, 3) eingerichtet ist, zumindest ein Zusatz-Leuchtbild (6, 7) zu erzeugen,
wobei das Teil-Leuchtbild (5) und das zumindest eine Zusatz-Leuchtbild (6, 7) gemeinsam ein Gesamt-Leuchtbild (8) bilden,
- die Projektionsvorrichtung (4) eingerichtet ist, das Gesamt-Leuchtbild (8) in einen Bereich (11) vor das Kraftfahrzeugscheinwerferlichtmodul in Form einer Lichtverteilung (9) abzubilden,
wobei das zumindest eine Zusatz-Leuchtbild (6, 7) an das Teil-Leuchtbild (5) angrenzt, wobei das Teil-Leuchtbild (5) mittels der Projektionsvorrichtung (4) als eine hochauflösende Teil-Lichtverteilung (90) vor das Kraftfahrzeugscheinwerferlichtmodul abgebildet wird und das zumindest eine Zusatz-Leuchtbild (6, 7) mittels der Projektionsvorrichtung (4) als eine nicht-hochauflösende Zusatz-Lichtverteilung (91, 92) vor das Kraftfahrzeugscheinwerferlichtmodul abgebildet wird, wobei der Laserscanner (1) zumindest eine Laserlichtquelle (100), zumindest einen Mikroscanner (115) und ein Lichtkonversionsmittel (110) aufweist, wobei
das Teil-Leuchtbild (5) auf dem Lichtkonversionsmittel (110) mittels Laserlichts (111) der zumindest einen Laserlichtquelle (100) erzeugbar ist, wobei ein Gehäuse vorgesehen ist, wobei der Laserscanner (1), die zwei Zusatzmodule (2, 3) und die Projektionsvorrichtung (4) in dem Gehäuse angeordnet und gehalten sind,
**gekennzeichnet durch**
genau zwei Zusatzmodule (2, 3), die eingerichtet sind, jeweils ein erstes Zusatz-Leuchtbild (6) und ein zweites Zusatz-Leuchtbild (7) zu erzeugen, und hinsichtlich des Laserscanners (1) derart angeordnet sind, dass das erste Zusatz-Leuchtbild (6) in Abstrahlrichtung (Z) gesehen rechts von dem Teil-Leuchtbild (5) angeordnet ist und das zweite Zusatz-Leuchtbild (6) in Abstrahlrichtung (Z) gesehen links von dem Teil-Leuchtbild (5) angeordnet ist,
wobei das Kraftfahrzeugscheinwerferlichtmodul genau einen einstückigen Kühlkörper aufweist der sowohl dem Laserscanner (1) als auch den zwei Zusatzmodulen (2, 3) zugeordnet ist.

2. Kraftfahrzeugscheinwerferlichtmodul nach Anspruch 1, **dadurch gekennzeichnet, dass** das zumindest eine Zusatz-Leuchtbild (6, 7) in horizontaler Richtung (H) eine niedrigere Auflösung als das Teil-Leuchtbild (5) aufweist.

3. Kraftfahrzeugscheinwerferlichtmodul einem der Ansprüche 1 bis 2, **dadurch gekennzeichnet, dass** das zumindest eine Zusatzmodul (2, 3) zumindest eine, vorzugsweise halbleiterbasierte Lichtquelle (200, 300) und zumindest eine Vorsatzoptik (201, 301) umfasst, wobei die zumindest eine Vorsatzoptik (201, 301) der zumindest einen Lichtquelle (200, 300) in Abstrahlrichtung (Z) derart nachgelagert ist, dass das Zusatz-Leuchtbild (6, 7) auf einer Lichtaustrittsfläche (2010, 3010) der zumindest einen Vorsatzoptik (201, 301) mittels Lichts der zumindest einen Lichtquelle (200, 300) erzeugbar ist.

4. Kraftfahrzeugscheinwerferlichtmodul nach Anspruch 3, **dadurch gekennzeichnet, dass** die Lichtaustrittsfläche (2010, 3010) und das Lichtkonversionsmittel (110) in einer gemeinsamen Fläche, vorzugsweise in einer Brennfläche, insbesondere in einer Brennebene der Projektionsvorrichtung (4) angeordnet sind und beispielsweise entlang einer, vorzugsweise vertikalen Linie (112) einander berühren.

5. Kraftfahrzeugscheinwerferlichtmodul nach Anspruch 4, **dadurch gekennzeichnet, dass** das Lichtkonversionsmittel (110) und die Lichtaustrittsfläche (2010, 3010) im Wesentlichen rechteckige Form aufweisen und/oder in horizontaler Richtung (H) nebeneinander und aneinander angrenzend angeordnet sind.

6. Kraftfahrzeugscheinwerferlichtmodul nach einem der Ansprüche 3 bis 5, **dadurch gekennzeichnet, dass** die zumindest eine Vorsatzoptik (201, 301) einen Grundkörper (2011, 3011) und zwei oder mehrere, vorzugsweise trichterförmigen Lichtleitkörper (2012, 3012) umfasst, die dem Grundkörper (2011, 3011) vorspringen und mit dem Grundkörper (2011, 3011) eine monolithische Struktur bilden, deren Lichtauskoppelflächen (2012a, 3012a) aneinander angrenzen und gemeinsam die Lichtaustrittsfläche (2010, 3010) bilden.

7. Kraftfahrzeugscheinwerferlichtmodul nach Anspruch 6, **dadurch gekennzeichnet, dass** jedes Zusatzmodul (6, 7) eine der Anzahl der Lichtleitkörper (2012, 3012) entsprechende Anzahl an Lichtquellen (200, 300) aufweist, wobei vorzugsweise jedem Lichtleitkörper (2012, 3012) genau eine Lichtquelle (200, 300) zugeordnet ist.

8. Kraftfahrzeugscheinwerferlichtmodul nach einem der Ansprüche 3 bis 7, **dadurch gekennzeichnet, dass** das zumindest eine Zusatzmodul (2, 3) eingerichtet ist, ein segmentiertes Zusatz-Leuchtbild (6, 7) zu erzeugen.

9. Kraftfahrzeugscheinwerferlichtmodul nach einem der Ansprüche 1 bis 8, **dadurch gekennzeichnet, dass** die Projektionsvorrichtung (4) eine Projektionslinse, beispielsweise eine Freiformlinse ist.

10. Kraftfahrzeugscheinwerferlichtmodul nach einem der Ansprüche 1 bis 9, **dadurch gekennzeichnet, dass** die Lichtverteilung eine Teil-Fernlichtverteilung, insbesondere eine blendfreie Teil-Lichtverteilung (9) ist.

11. Kraftfahrzeugscheinwerfer mit zumindest einem Kraftfahrzeugscheinwerferlichtmodul nach einem der Ansprüche 1 bis 10.

## Claims

1. Motor vehicle headlight module comprising
- a laser scanner (1)
- at least one additional module (2, 3) and
- a projection device (4),
wherein
* the laser scanner (1) is set up to generate a partial illuminated image (5),
* the at least one additional module (2, 3) is set up to generate at least one additional illuminated image (6, 7),
wherein the partial illuminated image (5) and the at least one additional illuminated image (6, 7) together form an overall luminous image (8),
- the projection device (4) is set up to project the overall luminous image (8) into an area (11) in front of the motor vehicle headlamp light module in the form of a light distribution (9),
wherein the at least one additional light image (6, 7) is adjacent to the partial light image (5), wherein the partial light image (5) is imaged by means of the projection device (4) as a high-resolution partial light distribution (90) in front of the motor vehicle headlamp light module and the at least one additional light image (6, 7) is imaged by means of the projection device (4) as a non-high-resolution additional light distribution (91, 92) in front of the motor vehicle headlamp light module, the laser scanner (1) having at least one laser light source (100), at least one microscanner (115) and a light conversion means (110), wherein
the partial luminous image (5) can be generated on the light conversion means (110) by means of laser light (111) from the at least one laser light source (100), a housing being provided, the laser scanner (1), the two additional modules (2, 3) and the projection device (4) being arranged and held in the housing,
**characterized by**
exactly two additional modules (2, 3), which are set up to project a first additional illuminated image (6) and a second additional illuminated image (7), and are arranged with respect to the laser scanner (1) in such a way that the first additional illuminated image (6) is arranged to the right of the partial illuminated image (5) as seen in the direction of radiation (Z) and the second additional illuminated image (6) is arranged to the left of the partial illuminated image (5) as seen in the direction of radiation (Z),
the motor vehicle headlamp light module having precisely one single-piece heat sink which is assigned both to the laser scanner (1) and to the two additional modules (2, 3).

2. Motor vehicle headlamp light module according to claim 1, **characterized in that** the at least one additional light image (6, 7) has a lower resolution in the horizontal direction (H) than the partial light image (5).

3. Motor vehicle headlamp light module according to one of claims 1 to 2, **characterized in that** the at least one additional module (2, 3) comprises at least one, preferably semiconductor-based light source (200, 300) and at least one attachment optics (201, 301), wherein the at least one attachment optics (201, 301) is positioned downstream of the at least one light source (200, 300) in the direction of emission (Z) in such a way that the additional light pattern (6, 7) can be generated on a light-emitting surface (2010, 3010) of the at least one optical attachment (201, 301) by means of light from the at least one light source (200, 300).

4. Motor vehicle headlamp light module according to claim 3, **characterized in that** the light-emitting surface (2010, 3010) and the light conversion means (110) are arranged in a common surface, preferably in a focal surface, in particular in a focal plane of the projection device (4) and, for example, touch each other along a preferably vertical line (112).

5. Motor vehicle headlamp light module according to claim 4, **characterized in that** the light conversion means (110) and the light-emitting surface (2010, 3010) have a substantially rectangular shape and/or are arranged next to each other and adjacent to each other in the horizontal direction (H).

6. Motor vehicle headlamp light module according to one of claims 3 to 5, **characterized in that** the at least one attachment optic (201, 301) comprises a base body (2011, 3011) and two or more, preferably funnel-shaped light guide bodies (2012, 3012)
which protrude from the base body (2011, 3011) and form a monolithic structure with the base body (2011, 3011), the light decoupling surfaces (2012a, 3012a) of which
adjoin each other and together form the light-emitting surface (2010, 3010).

7. Motor vehicle headlamp light module according to claim 6, **characterized in that** each additional module (6, 7) has a of light sources (200, 300), wherein preferably each light guide body (2012, 3012) is assigned exactly one light source (200, 300).

8. Motor vehicle headlamp light module according to one of claims 3 to 7, **characterized in that** the at least one additional module (2, 3) is set up to generate a segmented additional light image (6, 7).

9. Motor vehicle headlamp light module according to one of claims 1 to 8, **characterized in that** the projection device (4) is a projection lens, for example a free-form lens.

10. Motor vehicle headlamp light module according to one of claims 1 to 9, **characterized in that** the light distribution is a partial main beam distribution, in particular a glare-free partial light distribution (9).

11. Motor vehicle headlamp with at least one
Motor vehicle headlamp light module according to one of claims 1 to 10

## Revendications

1. Module d'éclairage de phare de véhicule automobile comprenant
- un scanner laser (1)
- au moins un module supplémentaire (2, 3) et
- un dispositif de projection (4),
dans lequel
* le scanner laser (1) est conçu pour générer une image lumineuse partielle (5),
* l'au moins un module supplémentaire (2, 3) est conçu pour générer au moins une image lumineuse supplémentaire (6, 7),
dans lequel l'image lumineuse partielle (5) et l'au moins une image lumineuse supplémentaire (6, 7) forment ensemble
forment une image lumineuse globale (8),
- le dispositif de projection (4) est conçu pour reproduire l'image lumineuse globale (8) dans une zone (11) devant le module d'éclairage des phares du véhicule automobile sous la forme d'une répartition lumineuse (9),
l'au moins une image lumineuse supplémentaire (6, 7) étant adjacente à l'image lumineuse partielle (5), l'image lumineuse partielle (5) étant représentée au moyen du dispositif de projection (4) sous forme d'une répartition lumineuse partielle (90) à haute résolution devant le module de lumière des phares du véhicule automobile et l'au moins une image lumineuse supplémentaire (6, 7) est reproduite au moyen du dispositif de projection (4) sous la forme d'une répartition lumineuse supplémentaire (91, 92) sans haute résolution devant le module d'éclairage des phares du véhicule automobile, le scanner laser (1) présentant au moins une source lumineuse laser (100), au moins un micro-scanner (115) et un moyen de conversion de lumière (110), dans lequel
l'image lumineuse partielle (5) peut être générée sur le moyen de conversion de lumière (110) au moyen d'une lumière laser (111) de la au moins une source de lumière laser (100), un boîtier étant prévu, le scanner laser (1), les deux modules supplémentaires (2, 3) et le dispositif de projection (4) étant disposés et maintenus dans le boîtier,
**caractérisé par**
exactement deux modules supplémentaires (2, 3) qui sont agencés pour afficher respectivement une première image lumineuse supplémentaire
(6) et une deuxième image lumineuse supplémentaire (7), et sont disposés par rapport au scanner laser (1) de telle sorte que la première image lumineuse supplémentaire (6) soit disposée à droite de l'image lumineuse partielle (5), vu dans la direction de rayonnement (Z), et que la deuxième image lumineuse supplémentaire (6) soit disposée à gauche de l'image lumineuse partielle (5), vu dans la direction de rayonnement (Z),
le module d'éclairage de phare de véhicule automobile présente exactement un corps de refroidissement d'une seule pièce qui est associé aussi bien au scanner laser (1) qu'aux deux modules supplémentaires (2, 3).

2. Module d'éclairage de phare de véhicule automobile selon la revendication 1, **caractérisé en ce que** l'au moins une image lumineuse supplémentaire (6, 7) a, dans la direction horizontale (H), une plus faible résolution inférieure à celle de l'image lumineuse partielle (5).

3. Module d'éclairage de phare de véhicule automobile selon l'une des revendications 1 à 2, **caractérisé en ce que** ledit au moins un module additionnel (2, 3) comprend au moins une source lumineuse (200, 300), de préférence à base de semi-conducteurs, et au moins une optique rapportée (201, 301), ladite au moins une optique rapportée (201, 301) est placée en aval de la au moins une source lumineuse (200, 300) dans la direction de rayonnement (Z) de telle sorte que l'image lumineuse supplémentaire (6, 7) peut être générée sur une surface de sortie de lumière (2010, 3010) de la au moins une optique rapportée (201, 301) au moyen de la lumière de la au moins une source lumineuse (200, 300).

4. Module d'éclairage de phare de véhicule automobile selon la revendication 3, **caractérisé en ce que** la surface de sortie de lumière (2010, 3010) et le moyen de conversion de lumière (110) sont disposés dans une surface commune, de préférence dans une surface focale, notamment dans un plan focal du dispositif de projection (4) et sont disposés par exemple le long de en contact l'un avec l'autre sur une ligne (112), de préférence verticale.

5. Module d'éclairage de projecteur de véhicule automobile selon la revendication 4, **caractérisé en ce que** le moyen de conversion de lumière (110) et la surface de sortie de lumière (2010, 3010) sont de forme sensiblement rectangulaire et/ou sont juxtaposés et contigus dans la direction horizontale (H).

6. Module d'éclairage de phare de véhicule automobile selon l'une des revendications 3 à 5, **caractérisé en ce que** l'au moins une optique rapportée (201, 301) comprend un corps de base (2011, 3011) et deux ou plusieurs corps de guidage de lumière (2012, 3012), de préférence en forme d'entonnoir, qui font saillie du corps de base (2011, 3011) et forment avec le corps de base (2011, 3011) une structure monolithique dont les surfaces de découplage de la lumière (2012a, 3012a)
sont contiguës et forment ensemble la surface de sortie de la lumière (2010, 3010).

7. Module d'éclairage de projecteur de véhicule automobile selon la revendication 6, **caractérisé en ce que, en ce que** chaque module complémentaire (6, 7) comporte un nombre d'éléments de guidage de lumière (2012, 3012) correspondant au nombre de nombre de sources lumineuses (200, 300), de préférence chaque corps de guidage de lumière (2012, 3012) est associée à exactement une source lumineuse (200, 300).

8. Module d'éclairage de projecteur de véhicule automobile selon l'une des revendications 3 à 7, **caractérisé en ce que** ledit au moins un module additionnel (2, 3) est agencé pour générer une image lumineuse additionnelle segmentée (6, 7).

9. Module d'éclairage de projecteur de véhicule automobile selon l'une des revendications 1 à 8, **caractérisé en ce que** le dispositif de projection (4) est une lentille de projection, par exemple une lentille de forme libre.

10. Module d'éclairage de projecteur de véhicule automobile selon l'une des revendications 1 à 9, **caractérisé en ce que** la répartition de la lumière est une répartition partielle de la lumière lointaine, notamment une répartition partielle de la lumière (9) sans éblouissement.

11. Projecteur de véhicule automobile comportant au moins un module d'éclairage de phare de véhicule automobile selon l'une des revendications 1 à 10.
